# EUROPEAN PATENT APPLICATION

(11) **EP 4 270 813 A1**
(43) Date of publication of application: **01.11.2023**
(21) Application number: 22169739.4
(22) Date of filing: 25.04.2022
(51) Int. Cl.: H04B 7/155, H04W 52/18, H04B 7/06, H04B 7/08, H04W 52/42

(54) **POWER CONTROL FOR NETWORK-CONTROLLED REPEATER**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The disclosure includes some methods and apparatuses that facilitate relaying of signals in a wireless communication system. The methods and apparatuses on the side of a relay node perform determining a power-related configuration individually for each beam out of a plurality of beams, and receiving signals and transmitting said signals with the plurality of beams, wherein each beam among the plurality of beams is transmitted according to the power-related configuration determined for said beam. The methods and apparatuses on the side of the network include determining a power-related configuration individually for each beam out of the plurality of beams, the power-related configuration being for application by a relay node in receiving signals and transmitting said signals using a plurality of beams; and transmitting to the relay node a configuration message based on the power-related configuration.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates efficient relaying of signals between two entities configuring signal power individually for respective beams.

In an embodiment, the techniques disclosed here feature an apparatus such as a relay apparatus. The apparatus comprises a transceiver and circuitry. The transceiver, in operation, receives signals and transmits said signals using a plurality of beams. The circuitry, in operation, performs (i) determining a power-related configuration individually for each beam out of the plurality of beams, and (ii) configuring of the transceiver to transmit each beam among the plurality of beams according to the power-related configuration determined for said beam.

It should be noted that general or specific embodiments may be implemented as a system, a method, an integrated circuit, a computer program, a storage medium, or any selective combination thereof. For instance, an integrated circuit can control a process of a relay node or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: is a block diagram illustrating a communication system with a relay and course functional communication structure of the relay;
- **Fig. 7**: is a block diagram illustrating functional structure of a relay node and a network node related to their communication;
- **Fig. 8**: is a block diagram illustrating an exemplary functional structure of the circuitry handling beamforming functionality on relay node side in Fig. 7;
- **Fig. 9**: is a block diagram illustrating an exemplary functional structure of the circuitry handling relay beamforming functionality on network node side in Fig. 7;
- **Fig. 10**: is a schematic drawing that illustrates a relay between a network node and two UEs applying individual powers when transmitting different beams towards the UEs;
- **Fig. 11**: is a schematic drawing illustrating beam and power pattern for two beams used to convey periodic traffic;
- **Fig. 12**: is a schematic drawing that illustrates application of different powers to respective different beams by a relay;
- **Fig. 13**: is a schematic drawing illustrating an exemplary self-oscillation occurrence scenario;
- **Fig. 14**: is a flow diagram illustrating decision on whether a link/beam recovery is to be performed;
- **Fig. 15**: is a first flow diagram illustrating exemplary methods for performing on a relay node and a network node; and
- **Fig. 16**: is a second flow diagram illustrating exemplary methods for performing on a relay node and a network node.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

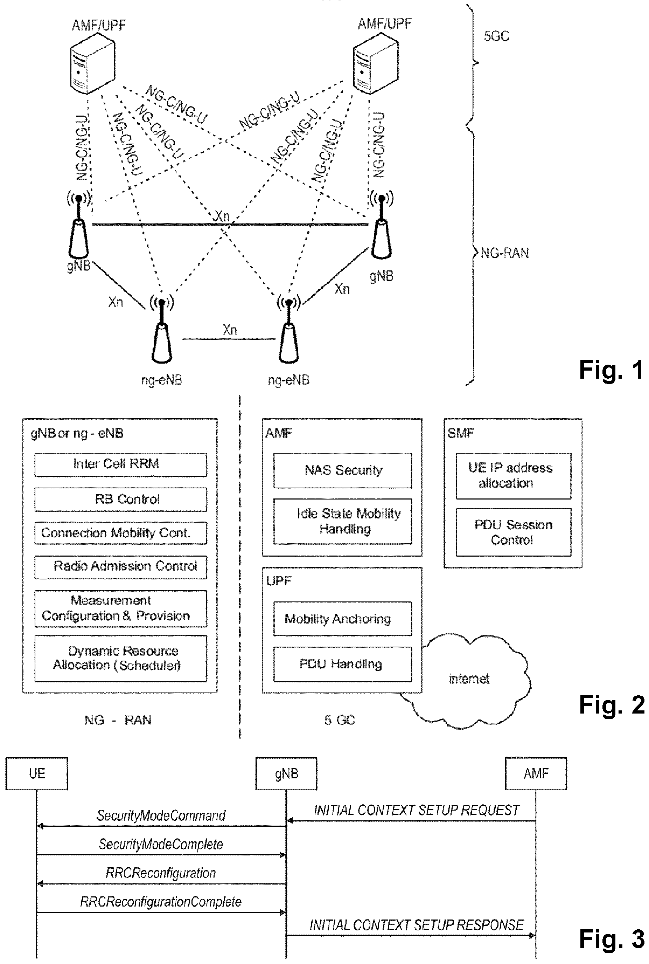

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

### Usage Scenarios of IMT for 2020 and beyond

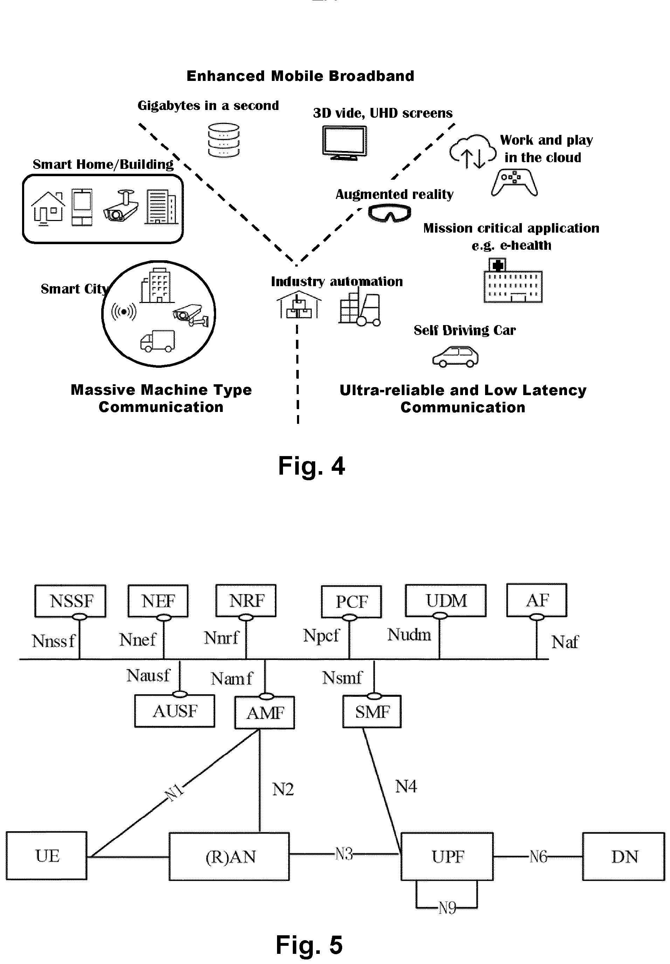

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring.

Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Frequency Bands

The present disclosure may be applied to any of a licensed band and an unlicensed band. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Terminal

A ***terminal*** or ***user terminal*** or ***user device*** or ***mobile station*** or ***mobile node*** is referred to in the LTE and NR as a ***user equipment (UE)**.* This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term ***base station*** or ***radio base station*** here refers to a physical entity within a communication network.

As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Relay node

Relay nodes serve for extending the coverage in a cell and/or to improve performance on a cell edge while enabling cost reduction in comparison with increasing the number of base stations (network nodes). A relay node receives signals from a base station in downlink, amplifies them, and transmits them further in the downlink to one or more terminals. The relay node also receives signals from one or more terminals in the uplink, amplifies them, and transmits them further in the uplink to the base station. Thus, a relay node may have two radio access interfaces: One is for radio access with a UE and the other one (sometimes also referred to as backhaul link) is for radio access for a base station. This may be in particular the case for the FDD relay operation. In case of TDD operation it is possible to have a single interface, e.g. with a duplexer that allows for alternating, in time domain, between the uplink and the downlink. Conceptually a relay node can be implemented in any layer (e.g, RF, L1, L2, or L3). However, for the sake of efficiency and cost reduction, a more simple repeaters on physical layer may be desirable.

LTE relaying was different to the use of a repeater which merely re-broadcasts (as an RF relay does) signals and was thus less cost-efficient. For example, a L2 relay in LTE actually received, demodulated and decoded the data, applied any error correction, etc to it and then retransmitted a new signal. In this way, the signal quality could be enhanced with an LTE relay, rather than suffering degradation from a reduced signal to noise ratio when using a repeater. For an LTE relay, the UEs communicated with the relay node, which in turn communicated with a "donor" eNB. It was possible to have a time division multiplex or frequency multiplex for the links UE-relay and relay-BS. Some other relay options have been provided, none of which supported beamforming. The LTE relaying concept has not been widely adopted.

The 3GPP has recently defined a study item followed by a work item for a network-controlled repeater in new radio, rel. 18 (cf. 3GPP RP-213562, "New SI: Study on NR Smart Repeaters", RAN#94e, Dec. 2021, available freely at www.3gpp.org). Accordingly, a relay may be a repeater that can extend the network coverage and is supposed to be more cost efficient compared to the Integrated Access and Backhaul (IAB) that was introduced in Rel. 16.

One of the desirable features of network-controlled repeaters is the ability of beamforming. This is one of key difference between the network-controlled repeaters and the LTE repeaters. The network-controlled repeater should support both outdoor and indoor scenarios.

Objectives of the study item for the network-controlled repeaters include the following features. Smart repeaters are to be used for extension of network coverage on FR1 FDD/TDD and FR2 TDD bands, while during the during the study, FR2 TDD developments may be prioritized for both, outdoor and 021 (outdoor-to-indoor) scenarios. The repeaters should be only single hop stationary smart repeaters that are to be transparent to UEs. In other words, there would be the signal paths gNB->sRelay->UE and UE->sRelay->gNB only (sRelay here referring to a smart relay, a smart repeater, or network-controlled repeater used in these examples exchangeably). The smart repeaters should be capable of maintaining the gNB-repeater link and repeater-UE link simultaneously. Cost efficiency is a key consideration.

The concepts that will need to be studies include identifying which side (control) information would be necessary or desirable for the smart repeaters that involve an assumption of maximum transmission power (as defined in L1). The side information may include beamforming information, timing information to align transmission/reception boundaries, information on uplink and downlink TDD configuration, information for efficient interference management and improved energy efficiency, power control information for interference management, and/or the like.

As mentioned above, the amplify-and-forward (AF) relays (RF repeaters) were also possible for LTE. Such relay is transparent in the system, it amplifies the received signal and forwards it to users. The relay itself does not know whether the amplified signal is a desired signal received from the UE/gNB, or whether it is merely an interference or noise. Hence, the relay may increase the inference in the system if it is not configured/deployed properly. The LTE RF repeater has been designed to work in sub-3 GHZ bands, in which beam forming was not required (cf. 3GPP TS 36.106, "Evolved Universal Terrestrial Radio Access (E-UTRA); FDD repeater radio transmission and reception, "version 17.0.0 available freely at www.3gpp.org). However, the network-controlled repeaters, considered for rel. 18, are supposed to work in both FR1 and FR2, with the possibility of beamforming. Hence, additional considerations should be taken for their design.

In the following, the term **relay,** also referred to here as **relay node** is used for a general node that is used to receive signals from one entity, amplify them and transmit them to another entity. The present disclosure is applicable to such general node as it relates to functionality of beamforming that may be beneficial in any relay irrespectively of its layer (RF, L1, L2, L3, etc), applicable frequency band, domain of multiplexing or the like. The term "repeater" is be used in this disclosure in alignment with recent discussions in the 3GPP, but is not to be understood in a limiting way because although the present disclosure is readily applicable to RF repeaters or smart repeaters as discussed for the NR, this application is only exemplary. The RF (radio frequency) repeaters do not perform baseband L1 processing such as demodulation and decoding or (H)ARQ, but merely receive, amplify and re-send the signals. Moreover, while a relay herein is described as amplifying signals between a base station (network node) and a user equipment, the relay of the present disclosure may be also used to amplify signals between two user equipments.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Reference Signals

In the present disclosure, the reference signals are signals known (e.g. predefined, fixed) to both a base station and a mobile station and/or a relay node and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization.

One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Communication

The present disclosure may be applied to any of communication involving a relay between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE and/or by a relay involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

### Terminology

In the following, UEs, relay nodes, base stations (network nodes), and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

### Embodiments

In general, as already indicated above, it may be desirable to facilitate beamforming operation and in particular a power control related to the beamforming operation of a relay.

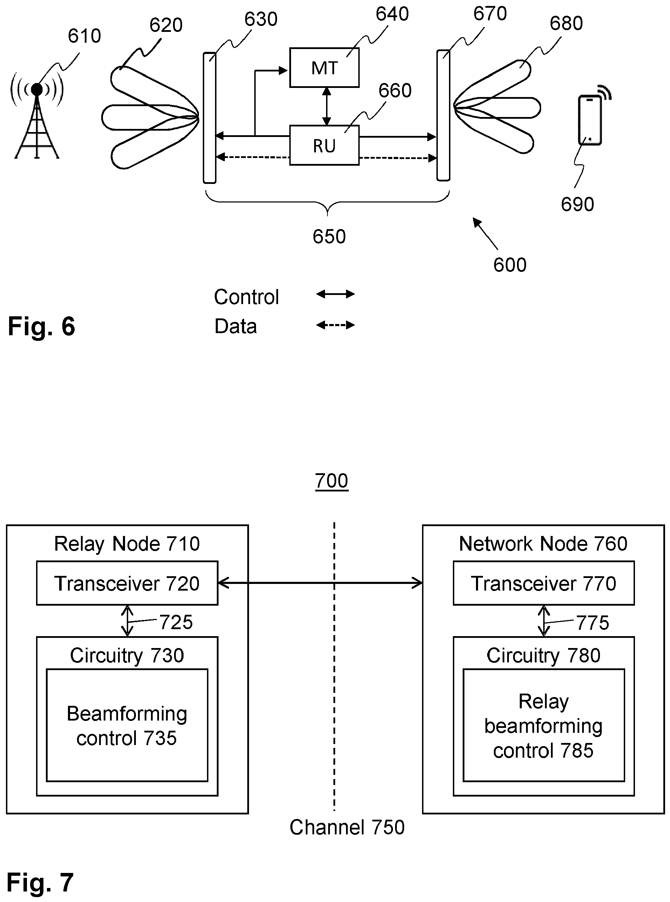

Fig. 6 shows an exemplary design of a communication system 600 including a relay 650, which may be a network-controlled repeater as envisaged currently for the NR. The relay 650 includes, as functional units, a mobile terminal (MT) section 640 and a radio unit (RU) section 660. The MT section 640 receives control signals from a network node (gNB) 610 and configures the RU section 660 accordingly. It can also send information to the gNB 610. The RU section 660 is responsible for receiving and amplifying the signal (including data and/or control information), received from the gNB 610 and/or one or more UEs such as the UE 690 illustrated in the figure. It is noted that the MT section 640 (that is similar to a UE in its functionality) may use the channels described above (e.g. in Section "Downlink control channel monitoring, PDCCH, DCI" or others) to communication with the gNB.

In Fig. 6, the relay 650 also includes a transceiver which is illustrated by way of a first transceiver portion 630 that transmits beams 620 towards the gNB 610 or receives beams 620 from the gNB 610 (and possibly further gNBs) and a second transceiver portion 670 that transmits beams 680 towards one or more UEs 690 or receives beams 680 from one or more UEs 690. This is to illustrate the functional communication structure of the relay. In general, there may be one transceiver unit that handles the transmission and/or reception from/to any entity. Such transceiver may include a plurality of antennas and amplifiers and, possibly, further circuitry for effectuating transmission and reception of signals. It may include more than one transmission and/or reception portions so that simultaneous transmission and reception to one or more communication peers is possible.

For example, as envisaged in the current study item in 3GPP, a network-controlled repeater may maintain one or more gNB-relay and relay-UE links. In particular, the FR2 band operations along the beamforming could cause frequent link failures. The relay 650 should be able to identify the link failures to some extent and take appropriate actions in order to avoid introducing unnecessary interference in the system. In addition, the relay 650 may serve UEs 690 with different communication requirements (such as requirements for URLLC or eMBB traffic). Hence, power control may turn to be an important concern for meeting the communication requirements.

A self-oscillation is another issue that could occur for the RF repeaters. Conventionally, automatic gain control (AGC) is used by repeaters to avoid the self-oscillation. The power controller at the gNB works to increase the power for weaker signals. Therefore, the AGC at the repeater side 610 and the power controller at the gNB 690 may conversely affect each other.

The present disclosure presents some power control solutions for network-controlled repeater with relation to with link failures, user scheduling, the self-oscillation and the like.

In particular, the present disclosure provides techniques facilitating a transmission power configuration for relay nodes for individual beams.

The present disclosure provides a relay node 710 illustrated in Fig. 7, which may correspond to the relay node 650 discussed above. The relay node 710 comprises a transceiver 720 and a circuitry 730 that may be capable of controlling (e.g. configuring) the transceiver 720. The transceiver 720, when in operation (and, e.g. when controlled by the circuitry 730 to do so), receives signals and transmits said signals using a plurality of beams.

In other words, the transceiver 720 is a transceiver of a relay node 710 that relays the received signals to their destination. The above-mentioned plurality of beams is not necessarily the amount or all beams that are used at the same time by the relay. The transceiver 720 may amplify the power of the signal to be transmitted in comparison with the power of the received signal. The transceiver 720 is capable of beamforming for signal transmission. The transmission may be an uplink transmission from a UE 690 to a network node 610 over the relay 710 (corresponding to relay 650 in Fig. 6). In addition or alternatively, the transmission may be a downlink transmission from a network node 610 to a UE 690 over the relay 710 (650). While the present disclosure focuses on control of the beamforming for the beams transmitted from the relay 710, the relay may also be capable of directional reception from the UE(s) 690 or from the network node 610. The relay node 710 may be capable of transmitting and receiving beams at the same time. In addition or alternatively, the relay node 710 may be capable of transmitting a plurality of beams at the same time and/or receiving a plurality of beams at the same time. These features, while not essential, may facilitate increasing efficiency of such relay node 710.

The circuitry 730, when in operation, performs:
- determining a power-related configuration individually for each beam out of the plurality of beams, and
- configuring of the transceiver to transmit each beam among the plurality of beams according to the power-related configuration determined for said beam.

As shown in Fig. 7, the circuitry 730 may have a beamforming control section 735 to perform these functions. It is noted that the circuitry 730 may perform further functions related to control of the transceiver or further functionality.

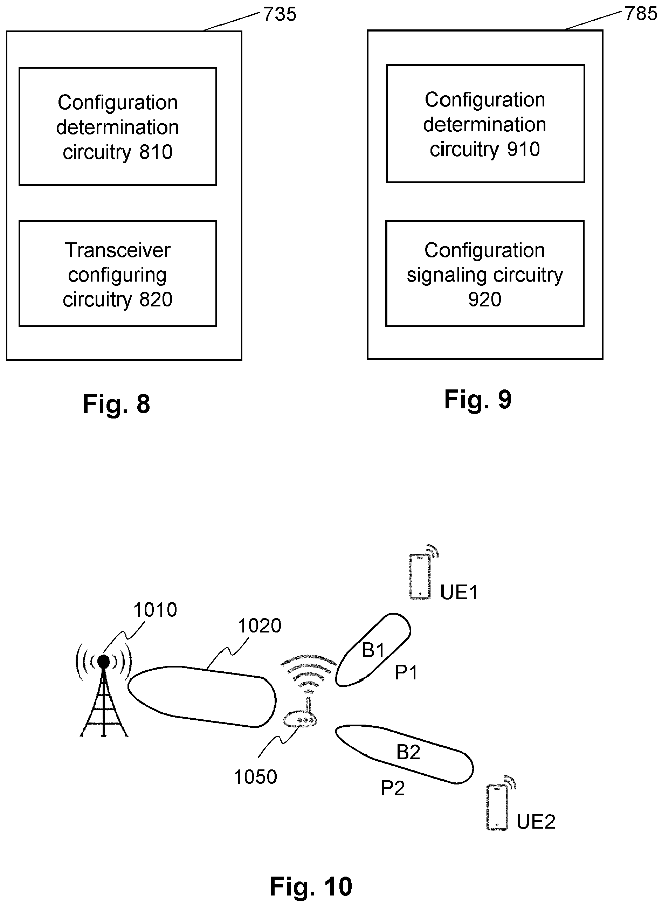

The beamforming control section 735 is exemplified in Fig. 8. It includes configuration determination circuitry 810 and transceiver configuring circuitry 820. The configuration determination circuitry 810 is configured to determine the power-related configuration individually for each beam out of the plurality of beams. Herein, the individual determination means that the determination is performed individually and that, as a consequence, the power related configuration is allowed to differ for different beams. Whether or not it actually differs for different beams depends on the result of the determinations individual per beam.

The determination (e.g. performed by the configuration determination circuitry 810) may be a determination from a side (control) information received from the network node 910 or it may be a determination performed at the relay node based on its own measurements as will be discussed below in more detail.

The transceiver configuring circuitry 820 is configured to configure the transceiver 720 over an interface 723 to transmit each beam among the plurality of beams according to the power-related configuration determined for said beam (correspondingly and individually for each beam out of the plurality of beams).

As can be seen in Fig. 7, the relay node 710 may communicate with a network node 760 over a channel 750. For example, the relay node 710 and the network node 760 may communicate on control plane over the channel 750. The network node 760 may send control messages to the relay node 710. Such control messages may include messages with measurement reports and/or other reports and/or a configuration to be adopted by the relay node 710 and/or requests for some reports or the like. In addition or alternatively, the relay node 710 may send control messages to the network node 760. Such control messages may include measurement reports and/or other reports and/or requests for some reports or actions from the side of the network node. Moreover, the channel 750 may be used for user plane signal transmissions between the network node 760 and the relay node 710. It is noted that, as mentioned above with reference to the smart repeaters studies currently under 3GPP, the relay node 710 does not necessarily include more than the RF part including beamforming out of the functions of the physical layer (L1). In other words, the relay node 710 in some implementations does not perform any demodulation or decoding or demultiplexing or the like. For example, possibility of different beamforming for different UEs may be restricted if the UEs are frequency multiplexed in the same time-domain resources in an OFDM or FDMA system.

When looking at Fig. 6, the relay 650 contains the RU section 660 and the MT section 640. The RU section 660 performs the relaying operation and is thus mainly responsible for user plane functions. The MT section 640 can directly communicate with the gNB 610, and is thus mainly responsible for the control plane. The MT section 640 may operate over the same carrier as RU section 660 or over a separate carrier (frequency band).

The present disclosure provides a network node 760. As shown in Fig. 7, the network node comprises a transceiver 770 and a circuitry 780. The transceiver 770 may be controlled by the circuitry 780 over an interface 775 to transmit and receive signals to and from various entities, such as relay nodes 650, 710 and one or more user equipments 690.

The circuitry 780 when in operation, performs:
- determining a power-related configuration individually for each beam out of the plurality of beams, the power-related configuration being for application by a relay node in receiving signals and transmitting said signals using a plurality of beams; and
- controlling the transceiver to transmit to the relay node a configuration message based on the power-related configuration.

Fig. 9 illustrates a functional portion of the circuitry 780 dedicated to controlling beamforming of a relay node and referred to as relay beamforming control 785 section also in Fig. 7. The relay beamforming control section 785, in an exemplary implementation, further comprises a configuration determination circuitry 910 and a configuration signaling circuitry 920.

The configuration determination circuitry 910 is configured to determine the power-related configuration individually for each beam out of the plurality of beams. As mentioned above, the power-related configuration serves for application by a relay node in receiving signals and transmitting said signals using a plurality of beams. The determination may be performed based on measurements performed by the network node and/or based on reports received from the relay node. For example, the reports may be individual for each beam, as is discussed below in more detail. For example, the network node performs the determination based on quality reports from various entities in the cell (such as relay nodes or UEs). It may consider the interference situation, some maximum power limitations given by a standard, the channel quality situation of the entities in the cell and further parameters that are known and considered by network nodes when performing scheduling tasks and the like.

The determination individually per each beam further includes considering at least one of measured power of the beam (measured by the network node itself or reported by a UE), reported (from a relay node, per beam) maximum power limit or another power limitation or a desired power or the like.

The configuration signaling circuitry 920 is configured to control the transceiver 770 to transmit to the relay node 710 a configuration message based on the power-related configuration. The configuration message may be generated (e.g. by the configuration signaling circuitry 920) to be based on the power-related configuration in various ways. For example, the power-related configuration may include directly the value of power to be set per beam by the relay node to which the configuration message (in general control message) is directed. The power value may be indicated with a certain granularity and does not have to be signaled in its entirety - it may be signaled differentially (as a difference to a last value configured) or the like. The present disclosure is not limited to any particular format or manner of signaling the value of power per beam.

The present disclosure is not limited to signaling directly the value of power per beam. The configuration message may be configuration that relates to resource allocation. For example, the configuration message may be a resource management or allocation message; or a resource or bearer related configuration message including some resource or bearer related settings that have been selected by the network node for the relay node for the individual beams.

The repeater may not be aware of the traffic types towards the UEs. Thus, if the gNB wants to assign different power for different respective resources or bearer, it may indicate such power assignment to the repeater based on the time and beam configuration (the gNB is aware of the traffic types and the corresponding resources including time domain resources and beams). According to one non-limiting example, the gNB may assign different (individual, not necessarily always different in value) powers to the respective different physical layer priorities. In Rel. 16, for example, UL channels could be assigned to a low priority (LP) or a high priority (HP). The gNB may configure the repeater to use a higher power for HP channels and a lower power for the LP channels. However, these are only examples on how the gNB may configure the power of the relay beams. The present disclosure is not limited to any particular gNB implementation and thus, the gNB may consider any relevant parameter to perform its resource management and allocation tasks including the power configuration.

The power-related configuration may be signaled from the network node 760 to the relay node 710 via any signaling type. For example, the signaling may be semi-static (e.g. RRC) configuration message or it may be a signaling on physical layer or on MAC layer. For instance, a PDSCH or PDCCH may be configured between the relay node 710 and the network node 760 and used for conveying the power-related configuration in the configuration message.

In addition or alternatively, in some implementations, the relay node 710 may transmit messages (e.g. reports) to the network node 760 via a PUSCH or PUCCH configured between the network node 760 and the relay node 710. The relay node 710 may also communicate with the network node 760 over an RRC protocol. For example, it may send reports or respond to requests form the network node 760 with an RRC message. Such RRC message may carry power-related information individual per beam.

It is further noted that the term "circuitry" herein refers to any hardware and/or software, For example the circuitry may include one or more processors, microcontrollers, programmable hardware such as FPGAa or dedicated hardware such as ASICS or the line, possibly further including further digital or analog circuits. The term "transceiver" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry.

Some of exemplary implementations of the present disclosure that will be described in more detail below include:
- Example 1: A relay is configured (by the gNB) with individual and possibly different transmission powers associated with the respective beams towards (DL) or from (UL) UEs (or directions of the same UE).
- Example 2: A relay is configured (by the gNB) with individual beam and transmission power patterns for periodic transmissions.
- Example 3: A relay reports the maximum transmission power for each beam to the gNB, which then can avoid self-oscillation or use the information for other power management purposes.
- Example 4: A relay reports, to the gNB, a sudden reduced transmission power applied by an ADC at the relay side.
- Example 5a: A relay is configured (by the gNB) with a power threshold for each beam. The relay may stop amplifying the signal if the perceived (received) signal is below the threshold.
- Example 5b: A relay could report the detected link failure between the repeater-UE (or the repeater-certain direction) to the gNB.
- Example 5c: A relay could be configured (by the gNB) with alternative beam(s) towards the gNB or alternative link towards another gNB. When the repeater detects a link failure between the gNB-repeater, it initiates the link recovery or switches to the alternative beam/link.

It is noted that these are examples and not to limit the present disclosure. They may be combined, so that a relay node and a network node supports one or more of these examples.

In general, the present disclosure provides various possibilities to configure power individually per transmission beam transmitted by a relay node. As can be taken from the above mentioned examples, the repeater may be configured by a network node with a transmission power per beam (individually for each beam out of a plurality of relay beams). In addition or alternatively, the relay node may report a feasible transmission power per beam to a network node and the network node may take into account the report when configuring the relay. In addition or alternatively, the relay may be configured by the network node with a minimum perceived power on each beam. If the received signal is lower than the configured minimum perceived power, the repeater stops amplifying and initiates a link recovery. It is noted that the above examples may be particularly advantageous for relays being repeaters (RF relays).

### Example 1

In this example, the determining of the power-related configuration at the relay node 710 includes receiving, from a network node 760, the power-related configuration which includes an indication of a transmission power (power indication) to be applied by the relay node in transmission of said beam to a user equipment or to the network node.

Correspondingly, at the network node 760, as mentioned above, the power-related configuration may be transmitted to the relay node and includes an indication of a transmission power to be applied by the relay node in transmission of said beam to a user equipment or to the network node.

This is illustrated in Fig. 10. Fig. 10 shows a network node (base station) 1010, a relay 1050 and two UEs, namely UE1 and UE2. The network node 1010 communicates with the relay 1050 via a beam 1020. For example, the power-related configuration may be transmitted from the network node 1010 to the relay 1050 via the beam 1030. Even though in this example there is the beam 1050 shown, in general, it is conceivable that the network node 1010 and the relay 1050 communicate with each other via more than one beams or without beamforming. The present disclosure is not limited to any particular way of communication between the network node 1010 and the relay 1050. Nevertheless, application of beamforming between them may lead to a more efficient power management and to a reduced cell interference. The relay relays in this example signals received from the network node 1010 to the UE1 and UE2. The signals directed (addressed) to UE1 are transmitted with a beam B1 having a transmission power P1. The signals directed (addressed) to UE2 are transmitted with a beam B2 having a transmission power P2. The directions of the beams B1 and B2 differ in this example. The powers P1 and P2 also differ in this example, as a result of individual determination of the power per beam at the network node, signaled to the relay node within the indication included in the power-related configuration.

A relay such as a repeater 1050, especially one deployed in indoor environment, may serve several UEs, such as UE1 and UE2, with different communication requirements (e.g. different traffic types with different quality of service requirements or the like). For example, U1 may have requirements for URLLC traffic whereas UE2 may have requirements for eMBB traffic. In case UE1 and UE2 are located in different directions relative to the relay 1050, the gNB 1050 can configure the relay 1050 to apply different transmission powers P1 and P2 to on each beam B1 and B2, respectively. The gNB 1010 can assign proper powers according to the link qualities and/or the communication requirements.

For instance, the transmission powers P1 and P2 may be assigned semi-statically (e.g. via RRC configuration) received from the gNB 1010, while the beams B1 and B2 may be changed adaptively (e.g. via dynamic signaling on layer 1 also referred to as physical layer signaling such as signaling transmitted over a PDSCH or PDCCH between the relay 1050 and the network node 1010). Such signaling enables a slower adaption of power to the traffic type and a slower link adaptation. At the same time, it enables adaptive user scheduling through beam modification in a dynamic manner for maintaining directivity and thus contributing to power management. As a consequence, the signaling overhead for adjusting the transmission power by the repeater is reduced, compared to adaptively changing the transmission power for each transmission instance.

However, the present disclosure in general and example 1 specifically are not limited to semi-static signaling of the power indication The transmission powers per beam can alternatively or in addition be assigned dynamically to at least one of specific DL beams or UL beams, specific UEs or beams of the same UE, to a specific bandwidth, or to specific time instances time instances. Such dynamic signaling may improve the power management and interference situation in the cell, but is connected with some more signaling overhead.

Fig. 10 shows an example of configuring downlink beams B1 and B2 and their respective powers P1 and P2. Similarly for uplink transmissions, the relay 1050 may be configured to apply different transmission powers towards the gNB 1010 when transmitting signals received from the UEs U1 and U2 (or certain directions) to the gNB 1010.

In general, the example 1 (and in general any example of the present disclosure) may be applied for configuring power for both uplink and downlink relaying, for only downlink relaying or for only uplink relaying. The power for beams in uplink may also be set individually and may thus differ from power for beams in downlink.

It is noted that the present example shows the gNB 1010 configuring the relay 1050 with a power-related configuration for relaying signals between the same gNB 1010 and UEs served by the gNB 1010. However, it is conceivable that one gNB 1010 may also configure the relay 1050 for relaying signals between another gNB and the same or different UEs.

As mentioned above, at the relay node 710, in some exemplary implementations, the power-related configuration is received via radio resource control protocol. Moreover, it may be received individually for one or more of: uplink beam, downlink beam, frequency band, and periodically scheduled time domain units.

At the network node 760, correspondingly, the power-related configuration is transmitted via radio resource control protocol individually for one or more of: uplink beam, downlink beam, frequency band, and periodically scheduled time domain units.

When referring to a frequency band, in NR, FR1 and FR2 may be two distinguishable frequency bands. However, the present disclosure is not limited to such coarse frequency band definition. In general, the frequency band may be defined by the system carrier (if carrier aggregation is supported by the system) or even by some narrower frequency band portions.

### Example 2

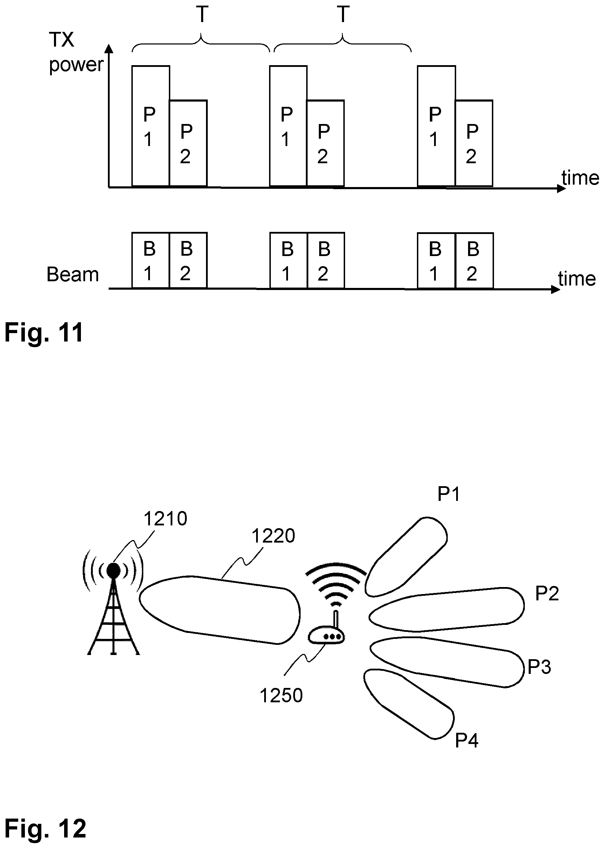

A relay (e.g. a repeater) 1050 may need to deliver some periodic data in downlink (from the gNB 1010 to U1 or UE1) and/or in uplink (from U1 or UE2 to the gNB 1010). Such periodic data may be, for example, a periodic channel quality information (CQI) report, a semi-persistent scheduling (SPS), a configured grant (CG), and/or a scheduling request (SR). According to an exemplary implementation, the relay 1050 is configured with a beam and transmission power pattern as illustrated in Fig. 11. In Fig. 11 it is assumed that a relay 1050 serves the two UEs UE1 and UE2 in a TDMA manner, i.e. in mutually different (non-overlapping) time-domain resources. The utilized beams B1 and B2 and associated with transmission powers P1 and P2 as shown in Fig. 11 by way of power-related configuration received from the gNB 1010.

The beam and transmission power pattern corresponds to a beam and power assignment to the periodically scheduled time domain units mentioned above. In particular, as shown in Fig. 11, there is a periodic resource allocated with a period T for UE1 followed by a periodic resource allocated with the same period T for UE2. The periodic resource for UE1 is configured with beam B1 and the periodic resource for UE2 is configured with beam B2. Moreover, the periodic resource for UE1 is configured with power P1 and the periodic resource for UE2 is configured with power P2. The periodic assignment of beams B1 and B2 (e.g. particular beam directions) may be referred to as a beam pattern. The relay 1050 applies such beam pattern when (periodically) conveying signals to the UE1 and UE2. The periodic assignment of powers P1 and P2 to certain beams (here to periodic beam B1 and B2) in time domain may be referred to as power pattern. The relay 1050 applies such power pattern when (periodically) conveying signals by beams B1 and B2 (here to the UE1 and UE2, respectively). It is noted that the power pattern may be conveyed to the relay node 1050 from the gNB 1010 associated with respective beams but without a specific beam pattern (indicating e.g. beam directions) or in combination with the beam pattern as the beam and transmission power pattern.

Power pattern and/or beam power pattern may facilitate reduction of the signaling overhead in power selection for periodic traffic. This is because for periodic traffic, the power pattern is signaled once and periodically applied to the periodic resources (that carry the periodic traffic via respective beams). Such power pattern configuration, beam pattern configuration, or beam and power pattern configuration may be semi-statically configured through RRC. Such signaling may be advantageous for the periodic traffic to further reduce overhead. However, Example 2 is not limited to RRC signaling and lower layer signaling may be applied alternatively or in addition.

The power and/or beams in the patterns mentioned above are assigned per time-domain units. For example, the beam and/or power may change per time domain unit such as slot, mini-slot, symbol or the like. The period T may then be measured in terms of such time domain units. The patterns in this example have assigned a particular power to a particular beam transmitted at a particular time. The beams B1 and B2 belonged to different UEs. However, in general, the periodic assignment may be also performed for different beams of the same UE. There may be power and/or beam pattern in downlink and/or in uplink indicated from the gNB 760 to the relay 710.

### Example 3

In this example, the determining at the relay node 710 includes estimating a maximum transmission power for avoiding a self-oscillation when transmitting said signals. Moreover, the circuitry 730 (for example, the transceiver configuring circuitry 820) performs controlling of the transceiver 720 to transmit an indication of the estimated maximum transmission power to the network node 760.

Correspondingly, at the network node 760, the determining includes the transceiver receiving an indication of the estimated maximum transmission power from the relay node; and determining the power-related configuration according to the estimated maximum transmission power.

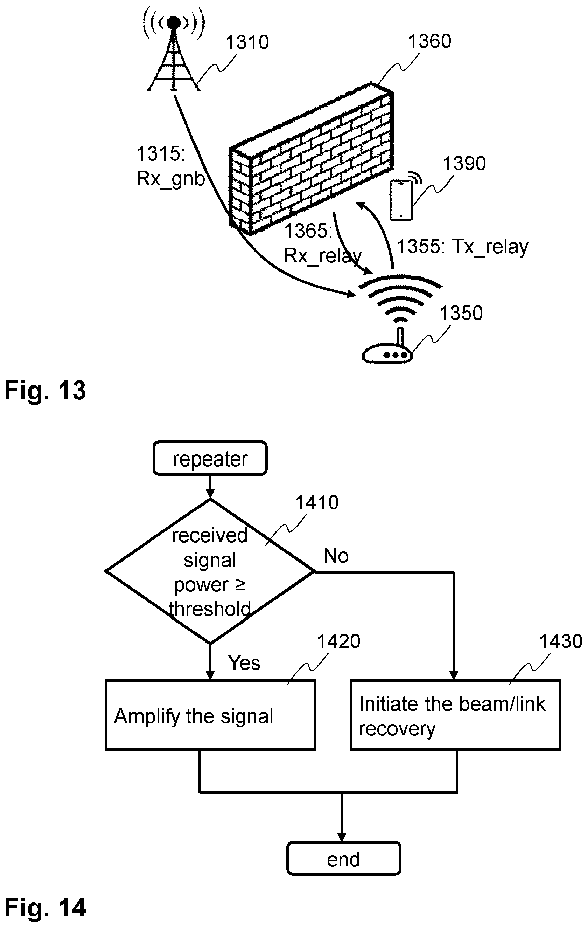

A signal amplified by the relay (repeater) 710 may be reflected back with a high amplitude, which may cause a self-oscillation. This issue is illustrated in Fig. 13. Fig. 13 shows a gNB 1310, a repeater (relay) 1350, and a UE 1390. The repeater 1350 amplifies the downlink signal 1315 received from the gNB (and thus also referred to as Rx_gnb) towards the UE 1390. The received signal 1315 is amplified by the repeater 1350 with a gain denoted g, resulting in the amplified output signal 1355 of g*Rx_gnb that is transmitted to the UE 1390 and denoted Tx_relay. A part 1365 of the amplified output signal 1355 is fed back to the beam receiving signal from the gNB. Thus, a constructive interference may cause a growing amplification loop. The part 1365 can be expressed Rx_relay=α*g*Rx_gnb, wherein a is a multiplier (smaller than or equal to 1; and larger than or equal to 0) that specifies the amount (proportion out of the Tx_relay) of the fed back signal.

A self-oscillation may sometimes occur if g*Rx_relay > Rx_gnb (the amplified signal is becoming stronger). In such case, the amplification gain g should be reduced, which is conventionally performed by the AGC (Adaptive Gain Control) of the repeater. Due to the beamforming feature of the repeater, the maximum gain for each beam could be different. This could affect the maximum transmission power that a repeater 1350 can transmit on each beam while avoiding the self-oscillation. The repeater 1350 can identify/estimate the maximum transmission power on each beam that avoids the self-oscillation. This is then reported to the gNB 1310. Such information may be used for the scheduling and power allocation performed by the gNB 1310. In other words, the gNB 1310 may then configure the repeater 1350 according to the received report.

Accordingly, the circuitry 730 (for example, the transceiver configuring circuitry 820) may also perform controlling of the transceiver 720 to reduce its gain. The AGC may be part of the transceiver configuring circuitry 820, or the AGC may be a part of the circuitry 730 and perform the gain control to reduce or avoid the self-oscillation. However, the present disclosure is not limited thereto and the AGC may be a part of the transceiver 720 and perform the gain control and inform the transceiver configuring circuitry 820 when self-oscillation is detected and a maximum transmission power per beam changed.

It is noted that in the above example, only a simplified scenario was shown for illustration. In general, the repeater 1350 does not necessarily performs amplification as the only operation. In general, the repeater 1350 may also perform some additional filtering or shaping or further operations on the signal. For example, some filtering over the edge of frequency bands in order to reduce the interference on the neighbor bands may be useful in some deployment scenarios.

In summary, in Example 3, the repeater 1350 determines the power-related configuration (including the maximum transmission power) per beam on its own side. It may then report the indication of the power-related configuration to the gNB 1310. It is noted that a relay (and correspondingly also a network node) may support Example 3 in addition or alternatively to Examples 1 and/or 2. For example, the network node configures the power per beam (possibly by way of a power and/or beam pattern) for a relay and the relay may report the maximum transmission power based on its determination considering, e.g., the self-oscillation (or another power management function). The network node may then take into the reported maximum transmission power when determining the power-related configuration for the relay.

### Example 4

In this example, at the relay node, the determining includes:
- determining that a transmission power for transmitting said signals needs to be reduced;
- reducing the transmission power applied to transmitting of said signals; and
- controlling a transceiver to transmit an indication of the reduced power to a network node.

At the network node 760, correspondingly, the determining includes receiving (via the transceiver 770) an indication of a reduced power to a network node, the indication indicating that the relay node 710 reduced the transmission power applied to transmitting of said signals via individual beam. Possibly, the determining further includes, determining the power-related configuration according to the indication.

In this Example 4, unlike in the Example 3, the relay node may suddenly need to reduce power in one or more of the beams it transmits as shown in Fig. 12. Fig. 12 illustrates a network node (gNB) 1210 and a relay node (repeater) 1250. The relay node transmits currently four beams with different directions and individually configurable powers P1, P2, P3, P4. The gNB 1210 may configure the relay node over a beam 1220. A beam with the same or different direction as 1220 may be used from the relay node 1250 to the network node 1210 to report the power reduction. Rather than reporting the estimated maximum transmission power, in Example 4, the relay node reports at least that it reduced power. However, it is noted that Example 3 and Example 4 may also be combined. The relay node may be capable of both, reporting an own transmission power reduction as well as reporting a maximum transmission power value. In an exemplary implementation, Example 3 and Example 4 may be combine in such a manner that the relay reports, e.g. in the same message, (i) that it reduced the transmission power for a certain beam and (ii) the maximum transmission power to avoid self-oscillation.

It is noted that in Example 4, the indication of the reduced power may be a mere indication that the power was reduced. However, the present disclosure is not limited to such an indication. The indication may include an indication of the value to which or by which the transmission power was reduced by the relay. In an exemplary combination with Example 3, the reduced power may be a power that has a value up to (smaller than or equal to) the reported maximum transmission power.

In an exemplary implementation, at the relay side, the determining that a transmission power for transmitting said signals needs to be reduced is performed when an increase in self-oscillation is detected.

In particular, in a dynamic environment, a smart repeater may need to further reduce the transmission power to avoid the self-oscillation as mentioned above. In such case, the actual transmission power could be less than the reported maximum possible transmission power on a beam or allocated power by the gNB (see Example 3). The repeater can report the further reduced transmission power to the gNB. Such report may be used in various ways. For instance, the gNB can be informed by the report that the maximum feasible transmission power on the beam is reached, so, will not ask the repeater to further increase the power. In case of a downlink data transmission, the early report of sudden reduced transmission power by the repeater could help the gNB to trigger the data retransmission, since there is a high chance that the downlink data will not be decoded successfully. Alternatively, the gNB may indicate (configure, instruct) the repeater to change the beam towards the UE.

Benefits of Example 4 include that the gNB may become aware of the excessive power reduction by the repeater. It can also take proper actions in time, such as using an alternative beam/link or triggering retransmissions or change modulation/coding scheme or the like.

However, the determining that a transmission power for transmitting said signals needs to be reduced is not necessarily related to self-oscillation. Another possible scenario for the power reduction is that a repeater serves two gNBs at a same time. In case it needs to repeat signals toward or from a first repeater (relay) with a higher transmission power, it may need to reduce the transmission power for transmission from or toward another (a second) gNB (different from the first gNB). In other words, the determining (detecting) that a transmission power for transmitting said signals needs to be reduced may be performed as a part of power management, e.g. to assign a limited power for different transmissions.

### Example 5

In this example, the power-related configuration includes an indication of a minimum received power threshold. Such indication may be transmitted from the network node to the relay node and, correspondingly received by the relay node from the network node.

There may be various scenarios in which such an indication of a minimum received power threshold is used and various ways how it is used. In the following, three non-limiting examples 5A, 5B, 5C will be presented.

### Example 5A

In this example, the configuring of the transceiver at the relay side includes, for said beam (for which the minimum received power threshold is defined):
- measuring power received from a direction of said beam from a user equipment or a network node toward which said beam is to be amplified (or to which said beam is to be transmitted);
- in case the measured power is below the minimum received power threshold for a predetermined time period, discontinuing the transmitting of said received signals.

For example, in FR2 band operations, there may be a higher likelihood that the gNB-repeater link or repeater-UE link is blocked. In such case, amplifying the signal may not be beneficial and it may introduce interference into the system. To address this issue, the repeater can be defined with the minimum received power threshold for each beam. Then, for example, if the perceived signal power at the repeater is less than the defined threshold, the repeater stops amplifying the signal from that beam (i.e. stops relaying the received signal that uses said beam). The minimum received power threshold can be indicated semi-statically or dynamically (e.g. for each scheduling instance or for a plurality of scheduling instances).

When referring to perceived signal power at the repeater, what is meant is a signal power measured at the repeater. After stopping the relaying, beam recovery procedure or generally a link recovery procedure may be initiated in order to overcome the blockage problem. For example, the gNB and/or the UE between which the relay is located may initiate such recovery procedure. If the recovery fails (or in some implementations possibly without trying the recovery first), a random access procedure may be initiated again by the UE or the gNB may page the UE again.

### Example 5B

In this example, at the relay side, the configuring of the transceiver includes, for said beam:
- measuring power received from a direction of said beam from a user equipment toward which said beam is to be amplified (or to which said beam is to be transmitted);
- in case the measured power is below the minimum power threshold for a predetermined time period:
   ∘ generate a failure indication;
   ∘ control the transceiver to transmit the failure indication to the network node.

At the network node 760, correspondingly, the determining includes receiving (via the transceiver 770) a failure indication to the network node, the failure indication indicating that the relay node measured power below the transmitted minimum power threshold for the predetermined time period; and, possibly, the determining takes into account the indication.

In an exemplary implementation, when the relay stops relaying due to a blockage on the repeater-UE link as described in Example 5A, the repeater may inform the gNB about the stopping, e.g. similarly as described in Example 4 by indicating as the failure indication that the transmission power for the particular beam has been reduced to zero (i.e. that the transmission of the beam has been stopped). In this way, in case the repeater identifies a link failure of repeater-UE, it can inform the gNB immediately. In such case, the gNB may reschedule the UE using an alternative beam or use another link if a dual connectivity/multi-TRP exists or take any other measure to enable reception or transmission of signals between itself and the UE. In general, the gNB may use this information for resource management and/or assignment and/or even for a handover decision.

### Example 5C

In this example, the processing circuitry 730 at the relay side, in operation, controls the transceiver 720 to receive, from a network node 760, an alternative beam configuration.

For instance, the alternative beam configuration includes (i) one or more beams to said network node having a direction different from the direction of said beam (currently used at the relay node towards the network node), and/or (ii) one or more beams (from said relay) to a network node different from said (currently serving the relay node with said beam) network node.

Specifically in case of (ii), if the link between the current network node and the relay even is blocked or otherwise deteriorated, provision of an alternative beam to another network node (gNB) may facilitate efficient addressing of even irrecoverable link failures. Also the case (i) above may contribute to reducing delay and errors due to a failed beam configuration.

Moreover, in this Example 5C, the configuring of the transceiver 720 at the relay side in an exemplary implementation may include (for said beam):
- measuring power received from a direction of said beam from a network node toward which said beam is to be amplified (to which said beam is to be transmitted);
- in case the measured power is below the minimum power threshold (which is the case e.g. for a link failure) for a predetermined time period, applying the alternative beam configuration for transmitting said signal to the network node (this may be a part of a beam recovery).

Correspondingly, at the network node side, the processing circuitry 780 (920), in operation, controls the transceiver to transmit, to the relay node, an alternative beam configuration. For example, the network node may determine such alternative configuration based on some reports from the relay node or UE(s) and/or own measurements of signals received from said relay node.

A predetermined period that is larger than zero may help to avoid detecting some power fluctuations as link failure that have such a short duration that they may have little or no impact on the signal quality on said beam.

According to an exemplary and non-limiting implementation of Example 5, after the predetermined time period, the processing circuitry 720 at the relay, in operation, performs link recovery of the link between the relay node and the network node, the link recovery including beam selection, such as a beam selection among the alternative beam configuration (or a plurality of alternative configurations) and/or beam selection among some predefined beams.

The link recovery may comprise a beam recovery procedure. The beam recovery could be done by initiating the RACH (random access channel) procedure. The beam recovery procedure may include, for instance, beam failure detection (that can be detected by the above mentioned comparison with the minimum received power threshold over the predetermined time period), best beam selection (e.g. SSB or CSI-RS), beam failure recovery request (transmitted via PRACH), and beam failure recovery response (transmitted via PDCCH including a RAR, random access response). The present disclosure is not limited to any particular signaling such as the one mentioned above for the beam recovery procedure. In general, the beam recovery includes beam selection, i.e. selection of a beam suitable for the further transmission. When referring to "best beam selection" what is meant is a beam selected according to some criteria as the best. Beam selection may be performed according to any procedure, the present disclosure is not limited to any particular beam selection procedure or criteria.

For example, a repeater can be configured with alternative beams towards the gNB or a link towards another gNB. When the repeater identifies a link failure on the link gNB-repeater (between the repeater and the gNB), it can initiate beam/link recovery or switch to the alternative beam/link. In addition, a time delay (the predetermined period) can be defined for the repeater. The repeater would then initiate the beam/link recovery if the initial beam (said beam for which the perceived power was below the minimum received power threshold) is not recovered for the specified delay.

The term "after the predetermined time period" is, for instance a time instance immediately or very closely upon the expiry of the predetermined period, i.e. the link/beam recovery is done upon expiry of the predetermined time period..

Fig. 14 illustrates schematically a flow chart for Example 5C. In particular, at the repeater side, it is determined in step 1410 whether or not the received signal power for a specific beam is larger than or equal to the minimum received power threshold. If affirmative, the signal is amplified in step 1420. Otherwise, the beam (or in general link) recovery is initiated in step 1430.

It is noted that Examples 5A, 5B and 5C may all be combined and thus implemented by a repeater and, correspondingly, by a gNB. Moreover, any of the Examples 5A, 5B and 5C may be implemented alone and each of the Examples 5A, 5B and 5C may be implemented alternatively or in addition to the Examples 1 to 4.

The examples above have been described with reference to apparatuses of relay node and network node and their functions when in operation. The present disclosure also provides the corresponding methods. The corresponding methods include steps described above as performed by the structural and functional units of the respective devices. For example, a methods are provided that can be performed by a relay device 710 and that includes steps described as performed above by the circuitry 730 in operation and the transceiver 720 in operation. Correspondingly, methods are provided that can be performed by a network device 760 and that includes steps described as performed above by the circuitry 780 in operation and the transceiver 770 in operation.

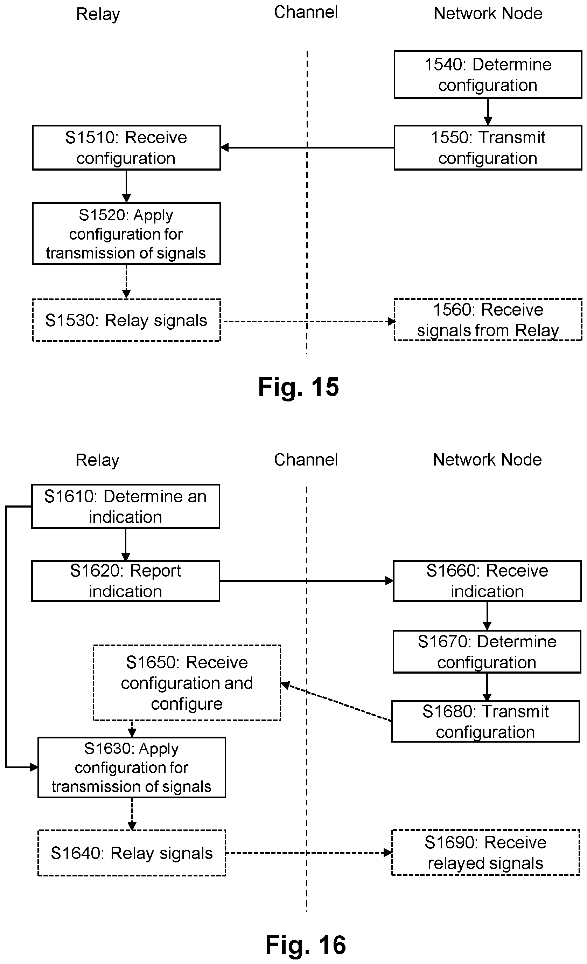

Figs. 15 and 16 illustrate such exemplary methods for a relay node and a network node.

For example, a method is provided (for a relay node) that comprises a step (S1510, S1610) of determining a power-related configuration individually for each beam out of a plurality of beams. The method further comprises a step (S1530, S1650) of receiving signals and transmitting said signals with the plurality of beams, wherein each beam among the plurality of beams is transmitted according to the power-related configuration determined for said beam.

Another method is provided (for a network node) that comprises a step (S1540, S1670) of determining a power-related configuration individually for each beam out of the plurality of beams, the power-related configuration being for application by a relay node in receiving signals and transmitting said signals using a plurality of beams; and a step (S1550, S1680) of transmitting to the relay node a configuration message based on the power-related configuration.

In particular, Fig. 15 illustrates an exemplary implementation in which the network node originates the individual power configuration for respective beams and configures the relay accordingly. This was also the case, for instance, in the above discussed Examples 1, 2, 5A,5B, and 5C. In particular, in step S1540, the network node determines the power configuration individually for respective two or more transmission beams at the relay node. Such determination may be based on various parameters and reports that would be also usually considered in scheduling and resource management functions of the network node (e.g. one or more of type of traffic, priority, channel quality, capabilities, etc). In step S1550, the network node transmits the configuration (the power-related configuration) determined in step S1540 to the relay node. The relay node determines the transmitted configuration including receiving it from the network node in step S1510. In step S1520, the relay node applies the configuration. In other words, the relay node in this step configures own transceiver accordingly. Then, in step S1530, the relay node relays the signals between the network node and UEs accordingly, i.e. it transmits the beams with the power individually set per beam according to the received and applied configuration. If the relay relays uplink signals, the network node may receive the relayed signal in step S1560.

Fig. 16 illustrates an exemplary implementation in which the relay node originates the individual power configuration for respective beams and reports it to the network node accordingly. This was also the case, for instance, in the above discussed Examples 3, 4, and 5B. In particular, in step S1610, the relay node determines an individual power-related indication for at least one beam. This may be, for instance, a maximum power achievable in view of self-oscillation or an indication that a power of an individual beam is to be reduced or that there is a link failure of a link using a particular beam. In step S1620, the relay node reports the indication to the network node. The network node received the indication in step S1660. In step S1670 the network node may use the received indication to (possibly alongside with other parameters as mentioned above) determine individual power-related configuration and transmit it to the relay node in step S1680. The relay node receives the configuration in step S1650 and may apply it and relay signals accordingly in steps S1630 and S1640.

However, it is noted that the relay node may also directly apply the determined (in step S1610) power indication and transmit the signals accordingly as indicated in Fig. 16 in steps S1630 and S1640. It does not have to wait for receiving configuration from the network node.

The network node may receive, in step S1690, signals relayed by the relay node.

Further exemplary details regarding the methods may be taken from the description of functions performed by the relay node and the network node and their functional and structural parts above.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, the relay node and the network node may be considered (each) as a communication apparatus.

The communication apparatus may comprise a transceiver and processing/control circuitry as explained above. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a relay node is provided comprising: a transceiver which, in operation, receives signals and transmits said signals using a plurality of beams; and processing circuitry which, in operation, performs: (i) determining a power-related configuration individually for each beam out of the plurality of beams, and (ii) configuring of the transceiver to transmit each beam among the plurality of beams according to the power-related configuration determined for said beam.

According to a second aspect provided in addition to the first aspect, the determining includes: controlling the transceiver to receive, from a network node, the power-related configuration including an indication of a transmission power to be applied by the relay node in transmission of said beam to a user equipment or to the network node.

According to a third aspect, provided in addition to one of the first to second aspects, the power-related configuration is received via radio resource control protocol individually for one or more of: uplink beam, downlink beam, frequency band, and periodically scheduled time domain units.

According to a fourth aspect, provided in addition to one of the first to third aspects, the power-related configuration includes an indication of a minimum received power threshold.

According to a fifth aspect, provided in addition to the fourth aspect, the configuring of the transceiver includes, for said beam: (i) measuring power received from a direction of said beam from a user equipment or a network node toward which said beam is to be amplified; and (ii) in case the measured power is below the minimum received power threshold for a predetermined time period, discontinuing the transmitting of said received signals.

According to a sixth aspect, provided in addition to one of the fourth to fifth aspects, the processing circuitry, in operation, controls the transceiver to receive, from a network node, an alternative beam configuration; and the configuring of the transceiver includes, for said beam: (i) measuring power received from a direction of said beam from a network node toward which said beam is to be amplified; and (ii) in case the measured power is below the minimum power threshold for a predetermined time period, applying the alternative beam configuration for transmitting said signal to the network node.

According to a seventh aspect, provided in addition to the sixth aspects, the alternative beam configuration includes: one or more beams to said network node having a direction different from the direction of said beam, and/or one or more beams to a network node different from said network node.

According to an eighth aspect, provided in addition to one of the sixth to seventh aspects, after the predetermined time period, the processing circuitry, in operation, performs link recovery of the link between the relay node and the network node, the link recovery including beam selection.

According to a ninth aspect, provided in addition to any of the fourth to eighth aspect, the configuring of the transceiver includes, for said beam: (a) measuring power received from a direction of said beam from a user equipment toward which said beam is to be amplified; and (b) in case the measured power is below the minimum power threshold for a predetermined time period: (i) generate a failure indication; and (ii) control the transceiver to transmit the failure indication to the network node.

According to a tenth aspect, provided in addition to one of the first to ninth aspects, the determining includes: estimating a maximum transmission power for avoiding a self-oscillation when transmitting said signals; and controlling a transceiver to transmit an indication of the estimated maximum transmission power to a network node.

According to an eleventh aspect, provided in addition to one of the first to tenth aspects, the determining includes: determining that a transmission power for transmitting said signals needs to be reduced; reducing the transmission power applied to transmitting of said signals; and controlling a transceiver to transmit an indication of the reduced power to a network node.

According to a twelfth aspect a provided in addition to the eleventh aspect, the determining that a transmission power for transmitting said signals needs to be reduced is performed when an increase in self-oscillation is detected.

According to a thirteenth aspect a network node is provided comprising: a transceiver; and processing circuitry which, in operation, performs: (i) determining a power-related configuration individually for each beam out of the plurality of beams, the power-related configuration being for application by a relay node in receiving signals and transmitting said signals using a plurality of beams; and (ii) controlling the transceiver to transmit to the relay node a configuration message based on the power-related configuration.

According to a fourteenth aspect, provided in addition to the thirteenth aspect, the power-related configuration includes an indication of a transmission power to be applied by the relay node in transmission of said beam to a user equipment or to the network node.

According to a fifteenth aspect, provided in addition to any one of the thirteenth to fourteenth aspect, the power-related configuration is transmitted via radio resource control protocol individually for one or more of: uplink beam, downlink beam, frequency band, and periodically scheduled time domain units.

According to a sixteenth aspect, provided in addition to any one of the thirteenth to fifteenth aspects, the power-related configuration includes an indication of a minimum received power threshold.

According to a seventeenth aspect, provided in addition to the sixteenth aspect, the processing circuitry, in operation, controls the transceiver to transmit, to the relay node, an alternative beam configuration.

According to an eighteenth aspect, provided in addition to the seventeenth aspect, the alternative beam configuration includes: one or more beams from said relay node having a direction different from the direction of said beam (currently used at the relay node towards the network node), and/or one or more beams from said relay to a network node different from said (current) network node.

According to a nineteenth aspect, provided in addition to any one of the sixteenth to eighteenth aspects, the determining includes receiving (via the transceiver) a failure indication to the network node, the failure indication indicating that the relay node measured power below the transmitted minimum power threshold for the predetermined time period; and, possibly, the determining takes into account the indication.

According to a twentieth aspect, in addition to any one of the thirteenth to nineteenth aspects, the determining includes the transceiver receiving an indication of the estimated maximum transmission power from the relay node; and determining the power-related configuration according to the estimated maximum transmission power.

According to a twenty-first aspect, in addition to any one of the thirteenth to twentieth aspects, the determining includes receiving (via the transceiver) an indication of a reduced power to a network node, the indication indicating that the relay node reduced the transmission power applied to transmitting of said signals via individual beam; and, possibly, determining the power-related configuration according to the indication.

According to a twenty-second aspect, an integrated circuit is provided (that may be deployed in a relay node) comprising: an interface to a transceiver capable of receiving signals and transmitting said signals using a plurality of beams; and circuitry configured to (by hardware or software) perform: (i) determining a power-related configuration individually for each beam out of the plurality of beams, and (ii) configuring, via said interface, the transceiver to transmit each beam among the plurality of beams according to the power-related configuration determined for said beam.

According to a twenty-third aspect, an integrated circuit is provided (that may be deployed in a network node) comprising: an interface to a transceiver capable of receiving and transmitting signals; and processing circuitry which is configured to perform: (i) determining a power-related configuration individually for each beam out of the plurality of beams, the power-related configuration being for application by a relay node in receiving signals and transmitting said signals using a plurality of beams; and (ii) controlling the transceiver via said interface to transmit to the relay node a configuration message based on the power-related configuration.

The integrated circuit of the twenty-fourth aspect may further implement the corresponding features of any of the second to twelfth aspects. The integrated circuit of the twenty-third aspect may further implement the corresponding features of any of the thirteenth to twenty-first aspects.

According to a twenty-fifth aspect, a method is provided, comprising the steps of determining a power-related configuration individually for each beam out of a plurality of beams, and receiving signals and transmitting said signals with the plurality of beams, wherein each beam among the plurality of beams is transmitted according to the power-related configuration determined for said beam.

According to a twenty-sixth aspect, a method is provided, comprising the steps of determining a power-related configuration individually for each beam out of the plurality of beams, the power-related configuration being for application by a relay node in receiving signals and transmitting said signals using a plurality of beams; and transmitting to the relay node a configuration message based on the power-related configuration.

Further aspects are provided for the method according to the twenty-fifth aspect, corresponding to steps performed in operation by any of the relay nodes of first to twelfth aspects. Further aspects are provided for the method according to the twenty-sixth aspect, corresponding to steps performed in operation by any of the network nodes of thirteenth to twenty-first aspects.

According to a twenty-seventh aspect, a program stored on a (non-transitory) storage medium and including code instructions, which, when executed on one or more processors of a user equipment, cause the one or more processors to execute the steps of any of the above mentioned methods (the twenty-fifth and twenty-sixth aspects and their respective further aspects).

Summarizing, the disclosure includes some methods and apparatuses that facilitate relaying of signals in a wireless communication system. The methods and apparatuses on the side of a relay node perform determining a power-related configuration individually for each beam out of a plurality of beams, and receiving signals and transmitting said signals with the plurality of beams, wherein each beam among the plurality of beams is transmitted according to the power-related configuration determined for said beam. The methods and apparatuses on the side of the network include determining a power-related configuration individually for each beam out of the plurality of beams, the power-related configuration being for application by a relay node in receiving signals and transmitting said signals using a plurality of beams; and transmitting to the relay node a configuration message based on the power-related configuration.

## Claims

1. A relay node comprising
a transceiver which, in operation, receives signals and transmits said signals using a plurality of beams; and
processing circuitry which, in operation, performs:
- determining a power-related configuration individually for each beam out of the plurality of beams, and
- configuring of the transceiver to transmit each beam among the plurality of beams according to the power-related configuration determined for said beam.

2. The relay node according to claim 1, wherein the determining includes:
controling the transceiver to receive, from a network node, the power-related configuration including an indication of a transmission power to be applied by the relay node in transmission of said beam to a user equipment or to the network node.

3. The relay node according to claim 1 or 2, wherein the power-related configuration is received via radio resource control protocol individually for one or more of:
- uplink beam,
- downlink beam,
- frequency band, and
- periodically scheduled time domain units.

4. The relay node according to any of claims 1 to 3, wherein the power-related configuration includes an indication of a minimum received power threshold.

5. The relay node according to claim 4, wherein the configuring of the transceiver includes, for said beam:
- measuring power received from a direction of said beam from a user equipment or a network node toward which said beam is to be amplified;
- in case the measured power is below the minimum received power threshold for a predetermined time period, discontinuing the transmitting of said received signals.

6. The relay node according to claim 4 or 5, wherein
the processing circuitry, in operation, controls the transceiver to receive, from a network node, an alternative beam configuration; and
the configuring of the transceiver includes, for said beam:
- measuring power received from a direction of said beam from a network node toward which said beam is to be amplified;
- in case the measured power is below the minimum power threshold for a predetermined time period, applying the alternative beam configuration for transmitting said signal to the network node.

7. The relay node according to claim 6, wherein, the alternative beam configuration includes:
one or more beams to said network node having a direction different from the direction of said beam, and/or
one or more beams to a network node different from said network node.

8. The relay node according to claim 6 or 7, wherein
after the predetermined time period, the processing circuitry, in operation, performs link recovery of the link between the relay node and the network node, the link recovery including beam selection.

9. The relay node according to any of claims 4 to 8, wherein the configuring of the transceiver includes, for said beam:
- measuring power received from a direction of said beam from a user equipment toward which said beam is to be amplified;
- in case the measured power is below the minimum power threshold for a predetermined time period:
∘ generate a failure indication;
∘ control the transceiver to transmit the failure indication to the network node.

10. The relay node according to any of claims 1 to 9, wherein the determining includes:
estimating a maximum transmission power for avoiding a self-oscillation when transmitting said signals; and
controlling a transceiver to transmit an indication of the estimated maximum transmission power to a network node.

11. The relay node according to any of claims 1 to 10, wherein the determining includes:
determining that a transmission power for transmitting said signals needs to be reduced;
reducing the transmission power applied to transmitting of said signals; and
controlling a transceiver to transmit an indication of the reduced power to a network node.

12. The relay node according to claim 11, wherein the determining that a transmission power for transmitting said signals needs to be reduced is performed when an increase in self-oscillation is detected.

13. A network node comprising:
a transceiver;
processing circuitry which, in operation, performs:
- determining a power-related configuration individually for each beam out of the plurality of beams, the power-related configuration being for application by a relay node in receiving signals and transmitting said signals using a plurality of beams; and
- controlling the transceiver to transmit to the relay node a configuration message based on the power-related configuration.

14. A method comprising:
determining a power-related configuration individually for each beam out of a plurality of beams, and
receiving signals and transmitting said signals with the plurality of beams, wherein each beam among the plurality of beams is transmitted according to the power-related configuration determined for said beam.

15. A method comprising:
determining a power-related configuration individually for each beam out of the plurality of beams, the power-related configuration being for application by a relay node in receiving signals and transmitting said signals using a plurality of beams; and
transmitting to the relay node a configuration message based on the power-related configuration.
